**Europäisches Patentamt**

**European Patent Office**

**Office européen des brevets**

(19)

(11) **EP 1 501 277 A1**

(12) **EUROPEAN PATENT APPLICATION**

(43) Date of publication:
**26.01.2005 Bulletin 2005/04**

(51) Int Cl.⁷: **H04N 1/40**

(21) Application number: **04012624.5**

(22) Date of filing: **27.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **23.07.2003 US 489324 P**
**07.11.2003 US 703840**

(71) Applicant: **SEIKO EPSON CORPORATION**
**Tokyo 163 (JP)**

(72) Inventors:
• **Huang, Jincheng**
  **Sunnyvale California 94086 (US)**
• **Bhattacharjya, Anoop, K.**
  **Campbell California 95008 (US)**

(74) Representative: **Grünecker, Kinkeldey,**
**Stockmair & Schwanhäusser Anwaltssozietät**
**Maximilianstrasse 58**
**80538 München (DE)**

(54) **Adaptive halftone scheme to preserve image smoothness and sharpness with region identification**

(57)  An adaptive halftone scheme is applied to a compound document to smooth the rendering while preserving edge sharpness. The adaptive halftone scheme involves identifying document regions as either smooth, edge or texture. Each identified region is then processed as follows. Wherever a smooth region is adjacent to an edge region and wherever a smooth region is adjacent to a texture region, create a transition region in a portion of that smooth region bordering that other region and apply a blend of a screening halftone technique (SCN) and an error diffusion with screening halftone technique (EDSCN) to that transition region, apply SCN to the remainder of that smooth region, apply ED to that other region if it is an edge region, and apply either EDSCN or SCN if it is texture region.

**Fig. 2 (a)**

EP 1 501 277 A1

Fig. 2 (b)

Fig. 2 (c)

Fig. 2 (d)

## Description

### CONTINUING APPLICATION DATA

This application claims the benefit under 35 U.S.C. §119(e) of U.S. Provisional Application No. 60/489,324, filed July 23, 2003. This priority application is incorporated by reference herein.

### BACKGROUND OF THE INVENTION

### Field of the Invention

The present invention relates to a halftone method/algorithm in which different halftone techniques are adaptively applied to different regions of a digital document. The method/algorithm of the present invention, which is designed to preserve both image smoothness and sharpness, may be embodied in an apparatus such as a computer, or as a program of instructions (e.g., software) embodied on a machine-readable medium.

### Description of the Related Art

There are many different types of halftone methods, including clustered-dot-ordered dithering, dispersed-dot-ordered dithering, stochastic screening, and error diffusion. Each halftone method has its own strengths and weaknesses. The two popular methods used in printing are clustered-dot-ordered dithering and error diffusion. The former method is used primarily in laser printers while the latter is used mostly in ink-jet printers.

The problem has been that many digital representations do not lend themselves to only one type of halftoning. Such representations are mixed mode, containing smooth regions, edge regions, etc. Applying only clustered-dot screening to such a document would likely improve the visual appearance of the smooth regions, but would tend to blur the edges. Applying only error diffusion would achieve the opposite result; the sharpness of the edges would be preserved but the smooth regions would suffer. Thus, different regions of a mixed mode digital document require different halftone treatment. On top of that, transitions must be carefully considered.

### OBJECTS OF THE INVENTION

Accordingly, it is an object of the present invention to provide an adaptive halftone algorithm/method to enhance the visual appearance of a compound document by smoothing it while preserving edge sharpness.

It is a further object of this invention to provide a region-based halftone algorithm/method that involves selective creation of transition regions where necessary to produce a higher quality rendering of a document.

### SUMMARY OF THE INVENTION

According to one aspect of this invention an adaptive halftoning method for use on a digital representation of a compound document is provided. The method comprises the steps of identifying regions in the digital representation, each identified region being classified as either a first region or a second region; and

processing each identified region as follows: wherever a first region is adjacent to a second region, creating a transition region in a portion of that first region bordering that second region and apply a blend of a first halftone technique and a third halftone technique to that transition region, applying the first halftone technique to the remainder of that first region, and applying a second halftone technique to that second region, and applying the first halftone technique to each remaining first region and applying the second halftone technique to each remaining second region.

In another embodiment, the region identification step includes classifying each identified region into one of three regions: a first region, a second region or a third region; and the processing of each identified region further comprises: wherever a first region is adjacent to a third region, creating a transition region in a portion of that first region bordering that third region and applying a blend of the first halftone technique and the third halftone technique to that transition region, applying the first halftone technique to the remainder of that first region, and applying either the first or the third halftone technique to that third region, and applying either the first or the third halftone technique to each remaining third region.

Preferably, the first region is a smooth region, the second region is an edge region, and in the second embodiment, the third region is preferably a texture region.

In both embodiments, preferably the first halftone technique is screening, the second halftone technique is error diffusion, and the third halftone technique is a combination of error diffusion and screening.

Preferably, for each pixel in each transition region, a blending coefficient is determined, and the first and third halftone techniques are applied to that pixel according to the determined blending coefficient. More preferably, the blending coefficient is determined based on the distance between that pixel and the nearest pixel in the adjacent second or third region.

Preferably, the processing of each identified region further comprises performing light-tone detection in each third region, and applying the first halftone technique to each sub-region identified as light-tone and applying the third halftone technique to each sub-region identified as non-light-tone.

In another aspect, the invention involves an apparatus for performing an adaptive halftoning scheme on a digital representation of a compound document. The apparatus comprises a module to identify regions in the digital representation as described above. Another module is configured to perform the appropriate processing as described above. Each module may be implemented in software or hardware. In the latter case, any such module may include one or more of the following: an instruction-based processor (e.g., a central processing unit (CPU)), an Application Specific Integrated Circuit (ASIC), digital signal processing circuitry, or combination thereof. Multiple modules may be combined, as appropriate, in any implementation.

In accordance with further aspects of the invention, the above-described method or any of the steps thereof may be embodied in a program of instructions (e.g., software) which may be stored on, or conveyed to, a computer or other processor-controlled device for execution. Alternatively, the method or any of the steps thereof may be implemented using functionally equivalent hardware (e.g., ASIC, digital signal processing circuitry, etc.) or a combination of software and hardware.

Other objects and attainments together with a fuller understanding of the invention will become apparent and appreciated by referring to the following description and claims taken in conjunction with the accompanying drawings.

**BRIEF DESCRIPTION OF THE DRAWINGS**

Figs. 1 (a), (b) and (c) illustrate a ramp comparison of different halftone techniques employed in embodiments of the invention.

Figs. 2 (a) - (d) illustrate an original text image and a comparison of the different halftone techniques shown in Fig. 1 applied to that text image.

Fig. 3 is a block diagram illustrating halftone mask selection and blending coefficient determination according to embodiments of the invention.

Fig. 4 (a) shows an original scanned image, and Fig. 4 (b) shows a labeling result of that scanned image that illustrates noise in a smooth region.

Figs. 5 (a) - (f) show different dot patterns that illustrate the visual artifacts by replacing a small region with one having similar intensity representation but different structure.

Fig. 6 (a) shows an unmodified halftoning mask, and Fig. 6 (b) shows a modified mask in which a transition region is created in a smooth region bordering an error diffusion region in accordance with embodiments of the invention.

Fig. 7 illustrates a smooth region and an error diffusion region with a transition region created in the portion of the smooth region bordering the error diffusion region in accordance with embodiments of the invention.

Fig. 8 illustrates the determination of light-tone regions in a texture region in accordance with embodiments of the invention.

Fig. 9 is a flow chart illustrating the adaptive halftoning method according to embodiments of the invention.

Fig. 10 is a block diagram of an exemplary image processing system which may be used to implement embodiments of the algorithm/method of the present invention.

**DESCRIPTION OF THE PREFERRED EMBODIMENTS**

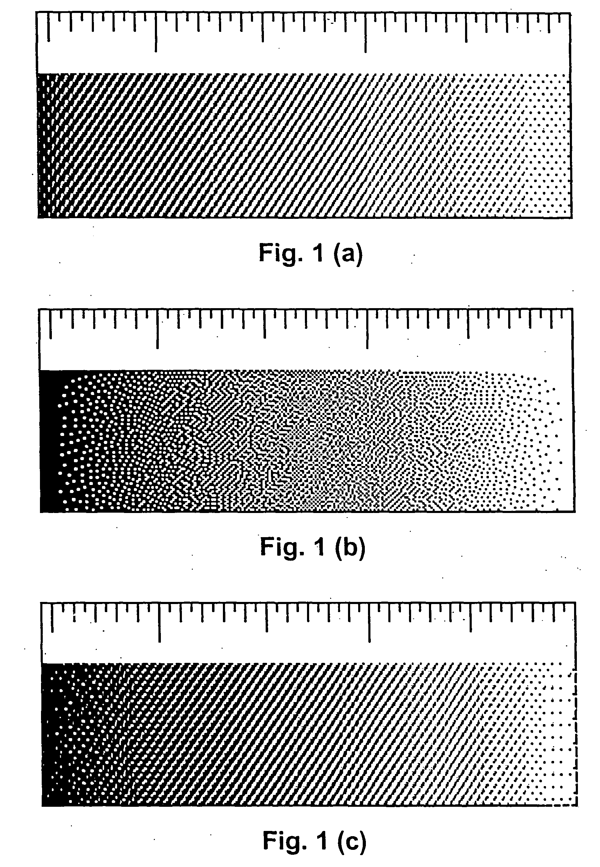

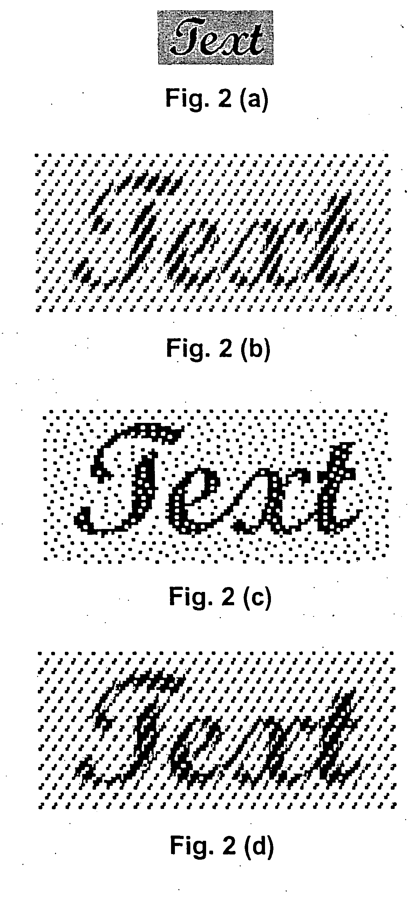

Figs. 1 (a), (b) and (c) provide a ramp comparison of three halftoning techniques: cluster-dot screening (SCN), error diffusion (ED), and error diffusion with cluster-dot screening (EDSCN). In ED, a single fixed threshold is used, whereas in EDSCN, an ordered dither threshold array or screen is used. Comparing Figs. 1 (a) and (c), it can be seen that the ramp generated using EDSCN does not differ too significantly from the one generated using SCN. However, some wavy patterns appear in the light-tone region if EDSCN is used. Fig. 2 (a) shows text on a light background, and Figs. 2 (b) - (d) show pulse width modulated halftone representations of that text image using different halftone techniques: SCN, ED and EDSCN, respectively. As can be seen from the figures, SCN produces jagged text and ED produces sharp text. EDSCN yields a compromise between the two.

Considering these observations, the inventors herein have constructed an adaptive halftone algorithm in which different halftone techniques are adaptively applied to different regions of a mixed mode or compound digital representation, e.g., a digital document, to improve overall quality of the document. The basic algorithm generally involves identifying regions in the document as either smooth, edge or fine texture. (Fine texture includes previously halftoned data as well as salt-and-pepper type noise.) Wherever a smooth region is adjacent to an edge region and wherever a smooth region is adjacent to a texture region, a transition region is created in the smooth region bordering such adjacent region. A blend of (i) a cluster-dot screening halftone technique (SCN) and (ii) a combination of error diffusion and screening halftone techniques (EDSCN) is selected for each of those transition regions. For the remainder of those smooth regions, as well as for other smooth regions that do not border either an edge or a texture region, SCN is selected. ED is selected for the edge regions, and EDSCN or SCN is selected for texture regions.

The region identification step can be carried out using a suitable labeling algorithm that labels each pixel in the compound document as belonging to a particular region. The labeling result is then used to select a halftone technique for that pixel as described above. The actual halftone technique applied is subject to certain additional constraints described below. Preferably, the labeling algorithm is capable of labeling each pixel as one of five classifications: fine edge, coarse edge, halftone, constant tone or other, is used. For example, the $X$-labeling algorithm disclosed in pending and commonly owned application serial no. 10/625,107, filed on July 23, 2003 and entitled "Method and Apparatus for Segmentation of Compound Documents," can be used to so label the pixels. The contents of that application is incorporated by reference herein.

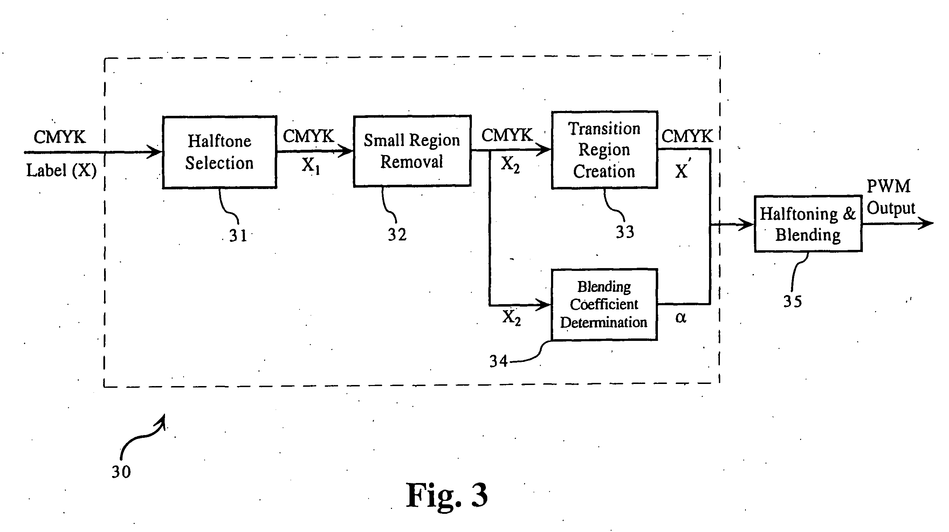

Fig. 3 is a block diagram illustrating the details of the adaptive halftone algorithm of this invention. The dashed-line-block represents an apparatus or module 30 comprised of one or more modules configured to select an appropriate halftone mask (technique) and determine a blending coefficient. The input to the dashed-line-block is a color signal (e. g., a CMYK signal) to which a suitable labeling algorithm has been applied. Based on the originally assigned labels $X$, an appropriate halftone technique is selected for each pixel, as represented by module 31.

To avoid creating visual disturbances resulting from abruptly changing halftone techniques between two regions, particularly when one region is small and surrounded by a much larger region, small regions are removed, as indicated in module 32. The halftone technique for the small regions are replaced by the one selected for the larger surrounding region. The output of the small region removal module 32 is input into both a transition creation module 33 and a blending coefficient determination module 34. There, a transition region is created at the boundary between each smooth and edge region and at the boundary between each smooth and texture region, and a blending coefficient is determined for each transition region created.

Then, the image data (e.g., CMYK data) is halftoned using appropriate halftone techniques according to the modified labels $X'$, and the halftoned data is blended in the transition region(s), as represented by module 35 to generate a halftone output. Each component in module 30 is explained in further detail below.

Halftone selection module 31 selects a halftone technique for each pixel based on its originally assigned label. The labeling algorithm described in the above-referenced application can label each pixel in a compound document as one of five types. Each of those types along with its associated X-field definition is given in Table 1 below.

Table 1

| Pixel Classification | *X*-field Definition |
|---|---|
| FINE EDGE | A detected edge pixel over a non-halftone region |
| COARSE EDGE | A detected edge pixel over a halftone region |
| HALFTONE | A detected non-edge halftone pixel |
| CONSTANT TONE | A detected constant-tone pixel over a non-halftone region |
| OTHER | All remaining pixels |

Table 2 correlates the pixel types with the corresponding halftone technique. Such correlation was experimentally determined based on observations of print outs from an Epson AcuLaser C4000 printer.

Table 2:

| Halftone Techniques for Different *X*-labels | |
| --- | --- |
| FINE EDGE & COARSE EDGE | Error Diffusion (ED) |
| HALFTONE | Error Diffusion with Cluster-dot Screening (EDSCN) |
| CONSTANT TONE & OTHER | Cluster-dot Screening (SCN) |

It is noted that the labeling algorithm of the above-referenced application labels boundary text pixels as edge--either fine or coarse. Interior text pixels are labeled as constant tone or other, and the interior areas are narrow. The color or intensity of text is usually homogenous and dark. To produce uniform and sharp output of text, the halftone technique for a narrow area labeled constant tone or other can be switched to ED if such area is enclosed by edge pixels.

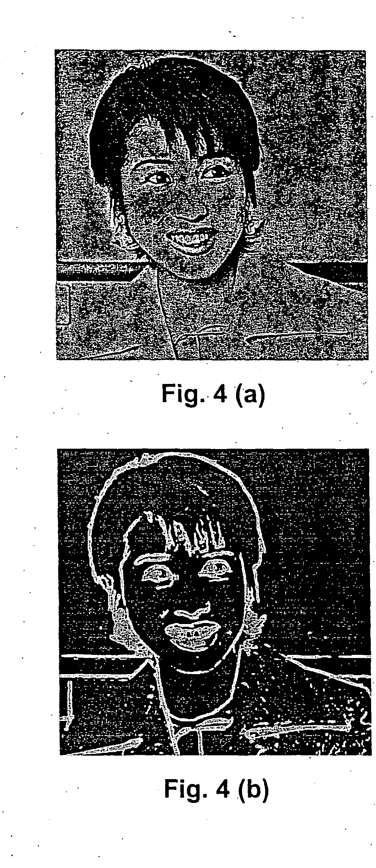

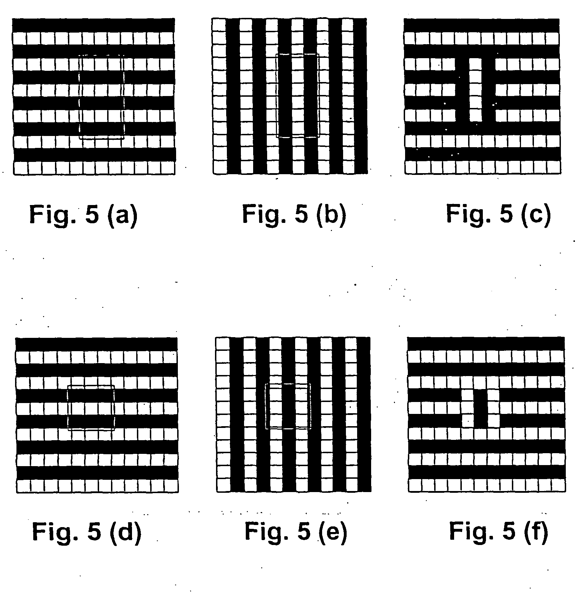

The small region removal module 32 is employed to avoid the problem of noisy labeling that leads to using one halftone technique in one area and a different halftone technique in an enclosed smaller area. Figs. 4 (a) and (b) respectively show an original image and the same image with a labeling and corresponding halftoning result. The regions depicting cloth is visually smooth as can be seen in Fig. 4 (a). Since the image was halftoned and the scanner picked up other noise, the labeling in that region is noisy, as can be seen in Fig. 4 (b). Note that the light gray in Fig. 4 (b) indicates coarse edge pixels and the dark gray halftone pixels. Applying these different halftone techniques to the different gray regions would generate a disturbed result in the smooth (i.e., dark gray) region. Figs. 5 (a) - (f) demonstrate the problem. Figs. 5 (a), (b), (d) and (e) are dot pattern representations of 50% gray. Fig. 5 (c) is the result of replacing the area enclosed by the rectangle in Fig. 5 (a) with the corresponding one in Fig. 5 (b). The dot pattern in Fig. 5 (c) is darker than those in Figs. 5 (a) and (b). Fig. 5 (f) is the result of replacing the area enclosed by the rectangle in Fig. 5 (d) with the corresponding one Fig. 5 (e). The dot pattern in Fig. 5 (f) is lighter than those in Figs. 5 (d) and (e). Another observation that can be made from Fig. 5 is that human eyes can easily detect a small change in structure in a smooth area.

Transition region creation and blending coefficient determination modules 33 and 34 are employed to maintain smoothness in smooth areas while preserving sharpness in edge areas. ED is used in edge regions to preserve sharpness. Usually the region outside the edge region is smooth where SCN is preferable. As seen from Figs. 5 (c) and (f), a structure change (i.e., a change in the dot pattern from halftoning) in a smooth region can create a disturbed result. As shown in Figs. 1 (a) and (c), the dot patterns from SCN and EDSCN are similar if the same dithering matrix is used in both cases. Another observation to be made is that the transition from EDSCN to ED near an edge region does not create annoying artifacts. Thus, this invention creates transition regions where necessary to avoid or minimize artifacts caused by abrupt transitions. Experiments indicate that the following conditions yield the best overall results: if a smooth region is adjacent to an edge region or to a texture region, a transition region is created therebetween in which a blend of two halftone techniques are used: SCN and EDSCN. If an edge region is adjacent to a texture region, no transition is necessary.

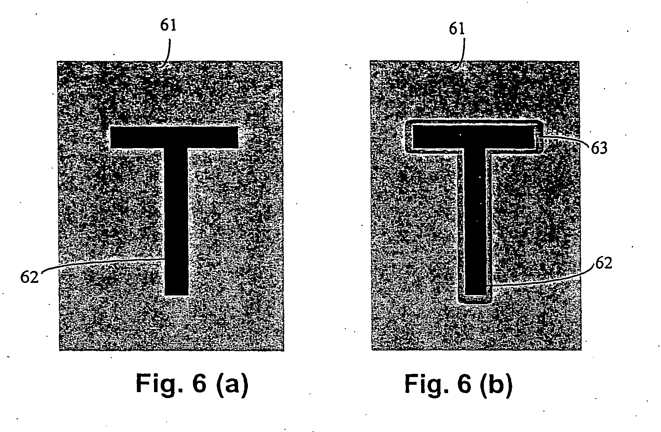

Fig. 6 (a) illustrates an original mask for halftoning, where the light gray represents a smooth region 61 and the darker color represents an edge region 62. Fig. 6 (b) illustrates the creation of a transition region 63, which is created outside of the edge region 62. That is, the transition region 63 is preferably created from a portion of the smooth region 61 that borders the edge region 62, as shown in Fig. 6 (b). Since the transition region 63 is created over a smooth region 61, a blending of SCN and EDSCN is used in the transition region 63. While Figs. 6 (a) and (b) illustrate the creation of a transition region in an area of a smooth region that borders an edge region, the same considerations apply when a smooth region borders a texture region.

The blending of these two halftone techniques can be described in terms of the halftone representation. In one embodiment, linear blending is used as follows:

$$PW(x,y) = (1-\alpha) \times PW_1(x,y) + \alpha \times PW_2(x,y), \quad (1)$$

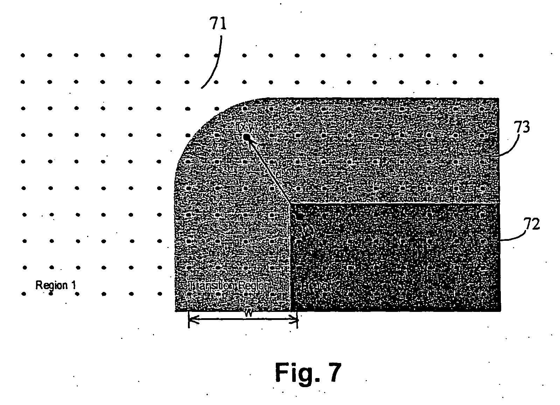

where $\alpha$ is the blending coefficient, and $PW_1(x,y)$ and $PW_2(x,y)$ are the halftone outputs from the SCN and the EDSCN halftone techniques respectively. Fig. 7 is a schematic illustration demonstrating how to determine the blending coefficient $\alpha$. In this example, region 1 represents a smooth region 71 and region 2 represents an edge region 72. One way to determine $\alpha$ is as follows:

$$\alpha = \frac{W - d}{W},$$

where *W* is the width of transition region 73 as shown in Fig. 7, *d* is the shortest distance from the pixel in question (*x*, *y)* to (*x\*,y\**), the closest pixel in edge region 72, i.e., $d = \sqrt{(x-x^*)^2 + (y-y^*)^2}$.

Further details regarding the halftone & blending module 35 are as follows. Initially, the halftone method *X'* is determined for each pixel and a blending coefficient $\alpha$ is calculated if that pixel is in the transition region. *X'* has a value indicative of the region and/or the particular halftone technique to be applied, e.g., a smooth region/SCN halftone technique, edge region/ED halftone technique, or transition region/blend of SCN and EDSCN halftone techniques. An appropriate halftone technique is selected for each pixel according to *X'*. If the pixel is in the transition region, SCN and EDSCN are blended according to the results of equation (1).

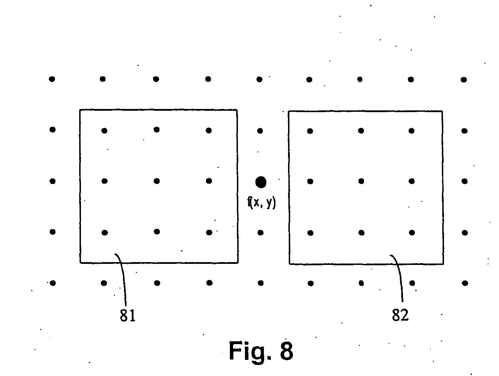

EDSCN can produce a noticeable wavy pattern in a smooth, light-tone region, which is not desireable. To minimize such an artifact, a light-tone detection is performed in the regions where EDSCN is selected, i.e., in the texture regions. Such light-tone detection may be performed by calculating the mean of each of two neighborhoods around a particular pixel and making certain comparisons. An example of the two neighborhoods that can be used are shown in Fig. 8. The means of the left and right pixel neighborhoods, 81 and 82 respectively, are calculated as follows:

$$\mu_l = \sum_{i=y-l}^{y+l} \sum_{j=x-L}^{x-1} f(i,j)$$

$$\mu_r = \sum_{i=y-l}^{y+l} \sum_{j=x+1}^{x+L} f(i,j)$$

$$(2)$$

where *L* is the block size and $L=2\times l+1$. Various conditions can be imposed to determine whether the subject pixel is in a light-tone region. In one embodiment, if $\mu_l$ and $\mu_r$ are both less than a threshold *T*, then *f* (*x, y*) is in a light-tone region. In another embodiment, if either $\mu_l$ or $\mu_r$ is less than *T* and *f* (*x, y*) < *T,* then *f* (*x, y*) is in a light-tone region. In a preferred embodiment, these two conditions can be disjunctively applied, that is, if one or the other is true, then *f(x,y)* is in a light-tone region. For each region detected to be light-tone, SCN is used instead of EDSCN. This approach reduces the likelihood that gaps between dot/line structures in the halftoned image are classified as light-tone. This light-tone detection scheme is robust because it is able to disregard small noise in light-tone regions in the scanned image. Light-tone detection can be performed earlier in the overall halftoning algorithm/method (such as in region determination) if desired. However, a separate *X'* is required for each color component.

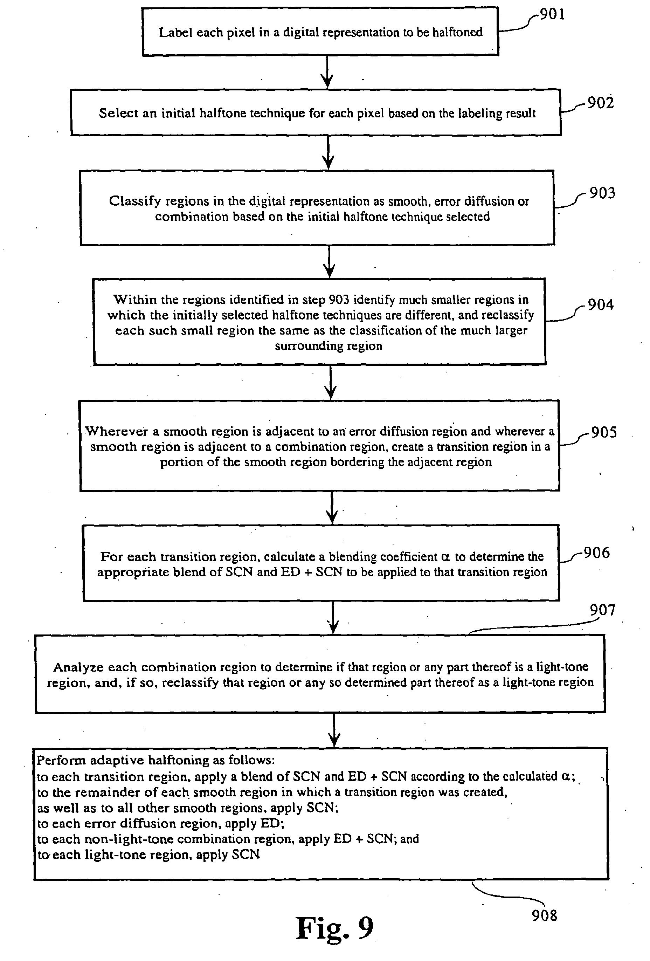

The overall adaptive halftoning algorithm/method will now be described with reference to the flow diagram of Fig. 9. A digital representation of a compound document to be processed in accordance with the invention is obtained in any suitable manner, e.g., by scanning a physical document, or retrieving a stored digital document, etc. The algorithm/method begins in step 901 by labeling each pixel in the digital representation. In step 902, an initial halftone technique is selected for each pixel based on the labeling result. Regions in the representation are then classified as either smooth, edge or texture based on the initial halftone technique selected (step 903). Within these identified regions much smaller regions, in which the initially selected halftone techniques are different from the respective halftoning techniques initially selected for the larger regions, are identified (step 904). Wherever a smooth region is adjacent to an edge region and wherever a smooth region is adjacent to a texture region, a transition region is created in a portion of the smooth region bordering the adjacent region (step 905). For each transition region, a blending coefficient $\alpha$ is calculated to determine the appropriate blend of SCN and EDSCN to be applied to that transition region (step 906). In step 907, each texture region is analyzed to determine if that region or any part thereof is a light-tone region, and, if so, each such region or part thereof is reclassified as a light-tone region. Step 907 may be performed earlier if desired. Next, adaptive halftoning is performed in step 908 as follows:

to each transition region, a blend of SCN and EDSCN is applied according to the calculated $\alpha$;

to the remainder of each smooth region in each a transition region was created, as well as to all other smooth regions, SCN is applied;

to each edge region, ED is applied;

to each non-light-tone texture region, EDSCN is applied; and

to each light-tone texture region, SCN is applied.

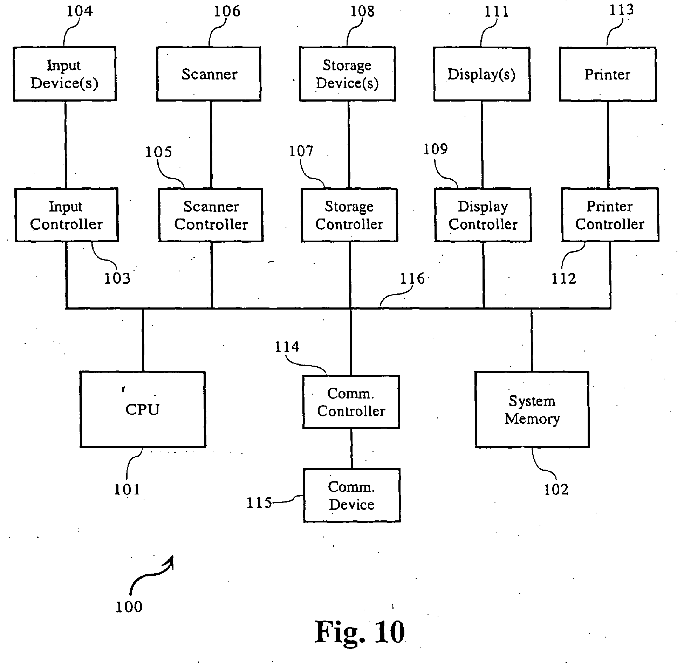

As noted above, the adaptive halftone scheme of the present invention may be conveniently implemented in software which may be run on an image processing system 100 of the type illustrated in Fig. 10. The image processing system is described below in the context of a computer with peripheral devices including a printer. This is but one example of an image processing system in which the algorithm of this invention may be incorporated. The algorithm may also be embodied in other suitable arrangements. For example, the inventive algorithm may be embodied directly in the printer. The algorithm may also be embodied in a photocopier which includes, or has access to, a processing unit.

The illustrated image processing system of Fig. 10 includes a central processing unit (CPU) 101 that provides computing resources and controls the system. CPU 101 may be implemented with a microprocessor or the like, and may also include a floating point coprocessor for mathematical computations. CPU 101 is preferably also configured to process image/graphics, video, and audio data. To this end, the CPU 101 may include one or more other chips designed specifically to handle such processing. System 100 further includes system memory 102 which may be in the form of random-access memory (RAM) and read-only memory (ROM).

Such a system 100 typically includes a number of controllers and peripheral devices, as shown in Fig. 10. In the illustrated embodiment, input controller 103 represents an interface to one or more input devices 104, such as a keyboard, mouse or stylus. There is also a controller 105 which communicates with a scanner 106 or equivalent device for digitizing documents. A storage controller 107 interfaces with one or more storage devices 108 each of which includes a storage medium such as magnetic tape or disk, or an optical medium that may be used to record programs of instructions for operating systems, utilities and applications which may include embodiments of programs that implement various aspects of the present invention. Storage device(s) 108 may also be used to store data to be processed/manipulated in accordance with the invention. A display controller 109 provides an interface to a display device 111 which may be of any known type.

In accordance with the invention, a printer controller 112 is also provided for communicating with a printer 113, which is preferably a laser printer. The processing of this invention may be embodied in the printer controller 112, e.g., the printer driver.

A communications controller 114 interfaces with a communication device 115 which enables system 100 to connect to remote devices through any of a variety of networks including the Internet, a local area network (LAN), a wide area network (WAN), or through any suitable electromagnetic carrier signals including infrared signals.

In the illustrated system, all major system components connect to bus 116 which may represent more than one physical bus.

Depending on the particular application of the invention, various system components may or may not be in physical proximity to one another. For example, the input data (e.g., the data used in creating the multi-level screens and/or the data to be embedded) and/or the output data (e.g., the multi-level screens and/or the image data containing embedded data) may be remotely transmitted from one physical location to another. Also, a program that implements various aspects of the screen design or data embedding process may be accessed from a remote location (e.g., a server) over a network. Such data and/or program(s) may be conveyed through any of a variety of machine-readable medium including magnetic tape or disk or optical disc, network signals, or any suitable electromagnetic carrier signal including an infrared signal.

While the present invention may be conveniently implemented with software, a hardware implementation or combined hardware/software implementation is also possible. A hardware implementation may be realized, for example, using ASIC(s), digital signal processing circuitry, or the like. As such, the claim language "machine-readable medium" includes not only software-carrying media, but also hardware having instructions for performing the required processing hardwired thereon, as well as a combination of hardware and software. Similarly, the claim language "program of instructions" includes both software and instructions embedded on hardware. Also, the "means" language used in the claims covers any appropriately configured processing device, such as an instruction-based processor (e.g., a CPU), ASIC, digital signal processing circuitry, or combination thereof. With these implementation alternatives in mind, it is to be understood that the figures and accompanying description provide the functional information one skilled in the art would require to write program code (i.e., software) or to fabricate circuits (i.e., hardware) to perform the processing required.

As the foregoing description demonstrates, the present invention provides an adaptive halftone scheme that treats outer portions of smooth regions differently depending on what type of region they border. By doing so, this invention smoothes an image while preserving edge sharpness.

While the invention has been described in conjunction with several specific embodiments, many further alternatives, modifications, variations and applications will be apparent to those skilled in the art that in light of the foregoing description. Thus, the invention described herein is intended to embrace all such alternatives, modifications, variations and applications as may fall within the spirit and scope of the appended claims.

**Claims**

1. An adaptive halftoning method for use on a digital representation of a compound document, comprising the steps of:

    identifying regions in the digital representation, each identified region being classified as either a first region or a second region; and

    processing each identified region as follows:

        wherever a first region is adjacent to a second region, creating a transition region in a portion of that first region bordering that second region and apply a blend of a first halftone technique and a third halftone technique to that transition region, applying the first halftone technique to the remainder of that first region, and applying a second halftone technique to that second region, and

        applying the first halftone technique to each remaining first region and applying the second halftone technique to each remaining second region.

2. An adaptive halftoning method as recited in claim 1, wherein,
    in the region identification step, each identified region is classified as either a first region, a second region or a third region; and
    the processing of each identified region further comprises:

        wherever a first region is adjacent to a third region, creating a transition region in a portion of that first region bordering that third region and applying a blend of the first halftone technique and the third halftone technique to that transition region, applying the first halftone technique to the remainder of that first region, and applying either the first or the third halftone technique to that third region, and

        applying either the first or the third halftone technique to each remaining third region.

3. An adaptive halftoning method as recited in claim 1, wherein the first region is a smooth region and the second region is an edge region.

4. An adaptive halftoning method as recited in claim 2, wherein the first region is a smooth region, the second region is an edge region, and the third region is a texture region.

5. An adaptive halftoning method as recited in claim 3, wherein the first halftone technique is screening, the second halftone technique is error diffusion, and the third halftone technique is a combination of error diffusion and screening.

6. An adaptive halftoning method as recited in claim 4, wherein the first halftone technique is screening, the second halftone technique is error diffusion, and the third halftone technique is a combination of error diffusion and screening.

7. An adaptive halftoning method as recited in claim 1, wherein, for each pixel in each transition region, a blending coefficient is determined, and the first and third halftone techniques are applied to that pixel according to the determined blending coefficient.

8. An adaptive halftoning method as recited in claim 7, wherein, for each pixel in each transition region, the blending coefficient for that pixel is determined based on the distance between that pixel and the nearest pixel in the adjacent second region.

9. An adaptive halftoning method as recited in claim 2, wherein, for each pixel in each transition region, a blending coefficient is determined, and the first and third halftone techniques are applied to that pixel according to the determined blending coefficient.

10. An adaptive halftoning method as recited in claim 9, wherein, for each pixel in each transition region, the blending coefficient for that pixel is determined based on the distance between that pixel and the nearest pixel in the adjacent second or third region.

**11.** An adaptive halftoning method as recited in claim 2, wherein the processing of each identified region further comprises performing light-tone detection in each third region, and applying the first halftone technique to each sub-region identified as light-tone and applying the third halftone technique to each sub-region identified as non-light-tone.

**12.** An apparatus for performing an adaptive halftoning scheme on a digital representation of a compound document, the apparatus comprising:

a region-identifying module configured to identify regions in the digital representation, each identified region being classified as either a first region or a second region; and

a module configured to process each identified region as follows:

wherever a first region is adjacent to a second region, create a transition region in a portion of that first region bordering that second region and apply a blend of a first halftone technique and a third halftone technique to that transition region, apply the first halftone technique to the remainder of that first region, and apply a second halftone technique to that second region, and

apply the first halftone technique to each remaining first region and apply the second halftone technique to each remaining second region.

**13.** An apparatus as recited in claim 12, wherein
each identified region is classified as either a first region, a second region or a third region; and
the processing module is configured to further process each identified region as follows:

wherever a first region is adjacent to a third region, creating a transition region in a portion of that first region bordering that third region and applying a blend of the first halftone technique and the third halftone technique to that transition region, applying the first halftone technique to the remainder of that first region, and applying either the first or the third halftone technique to that third region, and

applying either the first or the third halftone technique to each remaining third region.

**14.** An apparatus as recited in claim 12, wherein the apparatus comprises a computer, printer, or photocopier.

**15.** A machine-readable medium having a program of instructions for directing a machine to perform an adaptive halftoning method on a digital representation of a compound document, the program of instructions comprising:

instructions for identifying regions in the digital representation, each identified region being classified as either a first region or a second region; and

instructions for processing each identified region as follows:

wherever a first region is adjacent to a second region, creating a transition region in a portion of that first region bordering that second region and apply a blend of a first halftone technique and a third halftone technique to that transition region, applying the first halftone technique to the remainder of that first region, and applying a second halftone technique to that second region, and

applying the first halftone technique to each remaining first region and applying the second halftone technique to each remaining second region.

**16.** A machine-readable medium as recited in claim 15, wherein,
the region identification instructions further include instructions for classifying each identified region as either a first region, a second region or a third region; and
the identified region processing instructions further comprises the following instructions:

wherever a first region is adjacent to a third region, creating a transition region in a portion of that first region bordering that third region and applying a blend of the first halftone technique and the third halftone technique to that transition region, applying the first halftone technique to the remainder of that first region, and applying either the first or the third halftone technique to that third region, and

applying either the first or the third halftone technique to each remaining third region.

17. A machine-readable medium as recited in claim 15, wherein the first region is a smooth region and the second region is an edge region.

18. A machine-readable medium as recited in claim 16, wherein the first region is a smooth region, the second region is an edge region, and the third region is a texture region.

19. A machine-readable medium as recited in claim 17, wherein the first halftone technique is screening, the second halftone technique is error diffusion, and the third halftone technique is a combination of error diffusion and screening.

20. A machine-readable medium as recited in claim 18, wherein the first halftone technique is screening, the second halftone technique is error diffusion, and the third halftone technique is a combination of error diffusion and screening.

21. A machine-readable medium as recited in claim 15, further comprising instructions for determining a blending coefficient for each pixel in each transition region, and instructions for applying the first and third halftone techniques to that pixel according to the determined blending coefficient.

22. A machine-readable medium as recited in claim 21, wherein the instructions for determining the blending coefficient for each pixel in each transition region includes instructions for determining the blending coefficient based on the distance between that pixel and the nearest pixel in the adjacent second region.

23. A machine-readable medium as recited in claim 16, further comprising instructions for determining a blending coefficient for each pixel in each transition region, and instructions for applying the first and third halftone techniques to that pixel according to the determined blending coefficient.

24. A machine-readable medium as recited in claim 23, wherein the instructions for determining the blending coefficient for each pixel in each transition region includes instructions for determining the blending coefficient based on the distance between that pixel and the nearest pixel in the adjacent second or third region.

25. A machine-readable medium as recited in claim 16, wherein the instructions for processing each identified region further comprises instructions for performing light-tone detection in each third region, and instructions for applying the first halftone technique to each sub-region identified as light-tone and applying the third halftone technique to each sub-region identified as non-light-tone.

Fig. 1 (a)

Fig. 1 (b)

Fig. 1 (c)

Fig. 2 (a)

Fig. 2 (b)

Fig. 2 (c)

Fig. 2 (d)

Fig. 3

Fig. 4 (a)

Fig. 4 (b)

Fig. 5 (a)          Fig. 5 (b)          Fig. 5 (c)

Fig. 5 (d)          Fig. 5 (e)          Fig. 5 (f)

**Fig. 6 (a)**

**Fig. 6 (b)**

**Fig. 7**

f(x, y)

81

82

**Fig. 8**

```
┌──────────────────────────────────────────────────────────────┐
│        Label each pixel in a digital representation to be halftoned        │──901
└──────────────────────────────────────────────────────────────┘
                              │
                              ▼
┌──────────────────────────────────────────────────────────────┐
│   Select an initial halftone technique for each pixel based on the labeling result   │──902
└──────────────────────────────────────────────────────────────┘
                              │
                              ▼
┌──────────────────────────────────────────────────────────────┐
│   Classify regions in the digital representation as smooth, error diffusion or   │──903
│        combination based on the initial halftone technique selected        │
└──────────────────────────────────────────────────────────────┘
                              │
                              ▼
┌──────────────────────────────────────────────────────────────┐
│   Within the regions identified in step 903 identify much smaller regions in   │──904
│  which the initially selected halftone techniques are different, and reclassify  │
│    each such small region the same as the classification of the much larger    │
│                        surrounding region                        │
└──────────────────────────────────────────────────────────────┘
                              │
                              ▼
┌──────────────────────────────────────────────────────────────┐
│ Wherever a smooth region is adjacent to an error diffusion region and wherever a │──905
│  smooth region is adjacent to a combination region, create a transition region in a │
│             portion of the smooth region bordering the adjacent region             │
└──────────────────────────────────────────────────────────────┘
                              │
                              ▼
┌──────────────────────────────────────────────────────────────┐
│  For each transition region, calculate a blending coefficient α to determine the  │──906
│   appropriate blend of SCN and ED + SCN to be applied to that transition region   │
└──────────────────────────────────────────────────────────────┘
                              │
                              ▼                                         907
┌──────────────────────────────────────────────────────────────┐
│ Analyze each combination region to determine if that region or any part thereof is a light-tone │
│ region, and, if so, reclassify that region or any so determined part thereof as a light-tone region │
└──────────────────────────────────────────────────────────────┘
                              │
                              ▼
┌──────────────────────────────────────────────────────────────┐
│ Perform adaptive halftoning as follows:                        │
│ to each transition region, apply a blend of SCN and ED + SCN according to the calculated α; │
│ to the remainder of each smooth region in which a transition region was created, │
│ as well as to all other smooth regions, apply SCN;            │
│ to each error diffusion region, apply ED;                      │
│ to each non-light-tone combination region, apply ED + SCN; and │
│ to each light-tone region, apply SCN                           │
└──────────────────────────────────────────────────────────────┘
                                                               908
```

# Fig. 9

Fig. 10

**European Patent Office**

## EUROPEAN SEARCH REPORT

Application Number

EP 04 01 2624

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 6 118 935 A (SAMWORTH MARK R) 12 September 2000 (2000-09-12) * column 5, line 62 - line 63 * * column 6, line 8 - line 16 * * column 6, line 21 - line 22 * * figure 8 * | 1-25 | H04N1/40 |
| Y | US 5 014 333 A (MILLER RODNEY L ET AL) 7 May 1991 (1991-05-07) * column 2, line 35 - line 42 * * column 6, line 20 - line 24 * * column 6, line 34 - line 39 * | 1-25 | |
| A | EP 0 810 770 A (XEROX CORP) 3 December 1997 (1997-12-03) * column 8, line 40 - line 46 * * column 19, line 3 - line 7 * | 1,12,15 | |

TECHNICAL FIELDS SEARCHED (Int.Cl.7)

H04N
G06K

The present search report has been drawn up for all claims

| Place of search | Date of completion of the search | Examiner |
|---|---|---|
| Munich | 19 October 2004 | Heiner, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**EP 1 501 277 A1**

## ANNEX TO THE EUROPEAN SEARCH REPORT
## ON EUROPEAN PATENT APPLICATION NO.

EP 04 01 2624

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2004

| Patent document cited in search report | | Publication date | Patent family member(s) | | Publication date |
|---|---|---|---|---|---|
| US 6118935 | A | 12-09-2000 | NONE | | |
| US 5014333 | A | 07-05-1991 | NONE | | |
| EP 0810770 | A | 03-12-1997 | US | 5787206 A | 28-07-1998 |
| | | | EP | 0810770 A2 | 03-12-1997 |
| | | | JP | 10070661 A | 10-03-1998 |

EPO FORM P0459

For more details about this annex : see Official Journal of the European Patent Office, No. 12/82

23